# EUROPEAN PATENT APPLICATION

(11) **EP 3 572 254 A1**
(43) Date of publication of application: **27.11.2019**
(21) Application number: 18174431.9
(22) Date of filing: 25.05.2018
(51) Int. Cl.: B60H 1/00

(54) **A HEATING VENTILATION AND AIR CONDITIONING SYSTEM WITH SOUND ABSORPTION MEANS**

(71) Applicant: Valeo Klimasysteme GmbH, 96476 Bad Rodach (DE)
(72) Inventor: MUHR, Sebastian, 96476 BAD RODACH (DE); STROEHLA, Ralph, 96476 Bad Rodach (DE); KOCH, Peter, 96476 BAD RODACH (DE)
(74) Representative: Metz, Gaëlle

(57) **Abstract**

The invention concerns a Heating Ventilation and Air Conditioning system (10) for a vehicle comprising a main housing (2) characterized in that said main housing (2) comprises a first sound absorption means in form of at least one internal air duct (3) disposed therein and adapted to guide at least a portion of fluid flowing there through;
wherein said internal air duct (3) comprises an air tight and noise permeable material adapted to absorb and dissipate at least a portion of acoustic energy of noise for at least partially attenuating the noise.

## Description

The present disclosure relates to a heating ventilation and air conditioning system, particularly, the present disclosure relates to a noise damping system for a heating ventilation and air conditioning system for a vehicle.

A Heating Ventilation and Air Conditioning (HVAC) system hereinafter referred to as "system" for a vehicle regulates temperature and flow of air delivered to an inside of a vehicle cabin through a plurality of vents. Along with other elements, the "system" includes a main housing that in turn includes a blower housing and a diffuser section. The main housing also receives an evaporator, a heater and flow guide means such as rotary flaps and baffles for guiding fluid flow through at least one of the heater and evaporator and eventually directing the fluid processed by at least one of the evaporator and the heater to vents for delivering different combinations of fluid flow temperatures inside the vehicle cabin. The "system" may further include a suction side air filter disposed at inlet to the blower housing and a pressure side air filter disposed at outlet to the blower housing and upstream of the evaporator. The blower housing receives a blower or a fan and configures an annular air guiding channel between the fan and the blower housing. The diffuser section connects the blower housing to either one of the evaporator and the pressure side filter disposed upstream of the evaporator. The fan disposed in the blower housing generates pressure difference across the evaporator and also the heater for facilitating the flow of fluid there through.

The conventional "system", particularly, the fan or the blower of the "system" generates noise, particularly, at high cooling performance. The noise is transferred to the main housing and from the main housing to the vehicle cabin. Further, there is amplification of acoustic energy of the noise as it is transferred via blower air duct and main housing into the vehicle cabin. As a result, the noise generated by the fan or the blower and reaching the vehicle cabin becomes noticeable and causes disturbance and inconvenience to the passengers inside the vehicle cabin. The noise reaching the vehicle cabin is in the frequency range between 100 Hz and 10 kHz and is particularly more disturbing in instances such as when vehicle stops for short durations at traffic lights with engine off condition, especially in electrical driven vehicles. Few noise damping systems are known, for example, the German Patent document DE 10 2015 214709 discloses an acoustic damping chamber that includes a number of inner separation walls and at least a neck-like opening portion for getting connected with a diffuser through an opening or multiple openings configured on the diffuser. However, such conventional acoustic damping systems require the inner separation walls to be adjusted for adjusting the volume of the acoustic damping chamber, also the openings are to be adjusted for suppressing specific, disturbing sound waves in a particular frequency range only, thereby requiring intensive testing and adjustment efforts. Further, such conventional damping systems that require inner separation walls involve additional design and material costs. Additionally, use of Helmholtz resonators for dampening the noise are known, however, the Helmholtz resonators only effectively operate in a narrow, specific frequency range and are incapable of suppressing sound waves in a broader frequency range. Also, such conventional noise damping systems exhibit noise suppression capabilities limited to a relatively narrow frequency range only.

An object of the present invention is to provide an air conditioning system with a noise damping system that obviates the drawbacks associated with conventional noise damping systems that require intensive testing and adjustment efforts for suppressing specific, disturbing sound waves in a particular frequency range.

Another object of the present invention is to provide an air conditioning system with a noise damping system that is capable of suppressing noise in a wider frequency range.

Still another object of the present invention is to provide an air conditioning system that is simple in construction, convenient to assembly and use.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A Heating Ventilation and Air Conditioning (HVAC) system, hereinafter referred to as "system" is disclosed in accordance with an embodiment of the present disclosure. The "system" includes a main housing. The main housing includes at least one internal air duct disposed therein that guides at least a portion of fluid flowing there through. The internal air duct includes an air tight and noise permeable material that absorbs and dissipates at least a portion of acoustic energy of noise for at least partially attenuating the noise.

In accordance with an embodiment of the invention the air tight and noise permeable material is fleece, in other words, the internal air duct includes an air tight and noise permeable material made out of fleece.

Alternatively, the air tight and noise permeable material is glass wool, in other words, the internal air duct includes an air tight and noise permeable material made out of glass wool.

In accordance with an embodiment of the present invention the main housing includes a blower housing that receives a blower, the blower housing also includes an annular air guiding channel, said first sound absorption means further includes a sound damping chamber integrally formed on the annular air guiding channel with a cover disposed between the sound damping chamber and the annular air guiding channel, wherein the cover is of air tight and noise permeable material.

Alternatively, the sound damping chamber is removably mounted on the annular air guiding channel.

Generally, the at least one internal air duct reduces noise in a frequency range between 300 Hz and 2 kHz.

In accordance with an embodiment, the system includes an evaporator, a heater and air flow guide means for guiding fluid flow through at least the evaporator, the blower housing includes a blower and the annular air guiding channel between the blower and the blower housing and a diffuser section connects the blower housing to the evaporator.

Generally, the at least one internal air duct is disposed in the diffuser section.

Specifically, the main housing includes second sound absorption means in form of one or more cavities functioning as Helmholtz resonators.

In accordance with an embodiment, the main housing further includes third sound absorption means in form of obstacles configured from either one of beams with micro-perforations and walls formed of air tight and noise permeable material.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIGURE 1 illustrates a schematic representation of a Heating Ventilation and Air Conditioning (HVAC) system configured with a noise damping system in accordance with an embodiment of the present invention;
FIGURE 2a illustrates a schematic representation depicting another view of the Heating Ventilation and Air Conditioning (HVAC) system of FIGURE 1;
FIGURE 2b illustrates a schematic representation depicting an enlarged view of connection between a sound damping chamber and an annular air guiding channel of a blower housing of the Heating Ventilation and Air Conditioning (HVAC) system of FIGURE 1 and FIGURE 2a; and
FIGURE 3a - FIGURE 3c illustrates graphical representation depicting comparison between noise at different frequency levels reaching a vehicle cabin configured with the Heating Ventilation and Air Conditioning (HVAC) system with and without the damping system of the present invention.

It must be noted that the figures disclose the invention in a detailed enough way to be implemented, said figures helping to better define the invention if needs be. The invention should however not be limited to the embodiment disclosed in the description.

A Heating Ventilation and Air Conditioning (HVAC) hereinafter referred to as "system" is disclosed in accordance with an embodiment of the present disclosure. Although, the heating, ventilation and air-conditioning system of the present disclosure is for use in cabin air conditioning of vehicles, however, the heating, ventilation and air-conditioning system is applicable for other applications also and is not limited to vehicle cabin air conditioning only.

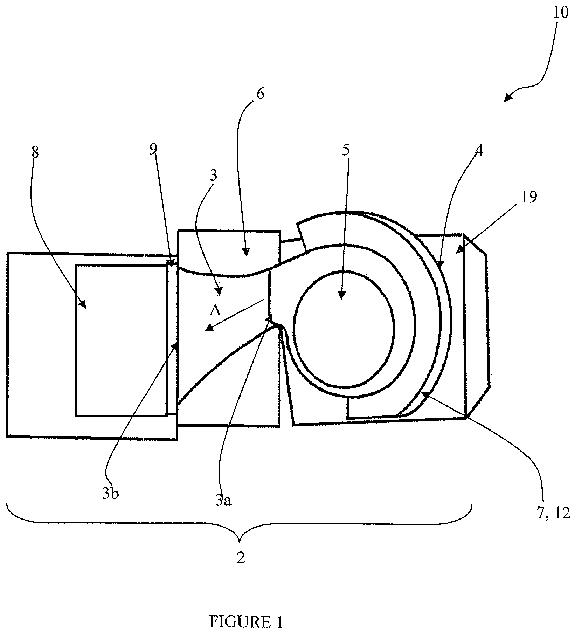

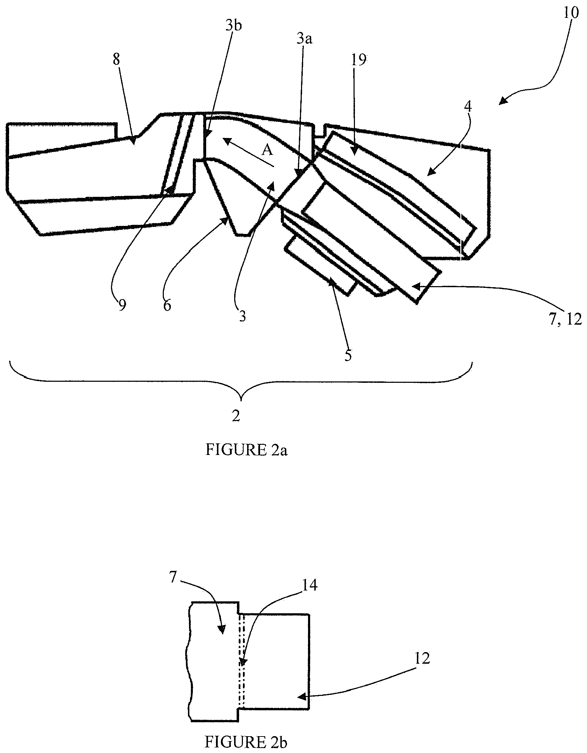

Figure 1 illustrates a schematic representation depicting details of a Heating Ventilation and Air Conditioning (HVAC) system 10 (hereinafter referred to as system 10). The system 10 includes a main housing 2, which in turn includes a blower housing 4 and a diffuser section 6. The main housing 2 receives an evaporator 8, a heater and flow guide means (not illustrated in FIGURES). The blower housing 4 receives a blower or a fan 5 and configures an annular air guiding channel 7 between the fan/blower 5 and the blower housing 4. The diffuser section 6 connects the blower housing 4 to either one of the evaporator 8 and a pressure side filter 9 disposed upstream of the evaporator 8. In accordance with another embodiment of the present invention, the system 10 further includes a suction side air filter 19 disposed upstream to air inlet of the blower housing 4. The suction side air filter 19 entraps particulate matter and prevents undesirable particulate matter from entering the blower housing 4. The main housing 2 includes a first sound absorption means in form of at least one internal air duct 3 disposed therein. The internal air duct 3 guides at least a portion of fluid flowing there through. Also, the internal air duct 3 includes an air tight and noise permeable material that absorbs and dissipates at least a portion of acoustic energy of noise for at least partially attenuating the noise. In accordance with an embodiment, the diffuser section 6 of the main housing 2 includes at least one internal air duct 3 disposed therein. The first sound absorption means further includes a sound damping chamber 12 integrally formed on at least a portion of the annular air guiding channel 7 with a cover 14 disposed between the sound damping chamber 12 and the annular air guiding channel 7, wherein the cover 14 is of air tight and noise permeable material. In accordance with an embodiment of the present invention, dimensions of the internal air duct 3 are smaller than width and height of the diffuser section 6 to facilitate receiving of the internal air duct 3 within the diffuser section 6. The air flow generated by the blower/fan 5 received inside the blower housing 4 enters the at least one internal air duct 3 received in the diffuser section 6 via an air inlet side 3a having a first cross section and leaves the at least one internal air duct 3 through an air outlet side 3b having a second cross section that is disposed either upstream of the evaporator 8 or upstream of the pressure side filter 9. In accordance with an embodiment, the diffuser section 6 may have first enlarging and later reducing cross-section in the direction of air flow as depicted by arrow "A" in Figure 2a, thereby resulting in averaging of sound pressure level due to reflections on its way through the diffuser section 6. Accordingly, the sound pressure peaks, mainly in the low frequency range are reduced.

The noise generated by the blower/fan 5 is first damped in the sound damping chamber 12 formed on at least a portion of the annular air guiding channel 7 and later further damped in the at least one internal air duct 3 disposed in the diffuser section 6. In accordance with an embodiment of the present invention, the sound damping chamber 12 is in form of a cavity extending inward from a wall configuring the annular air guiding channel 7 and covered by the cover 14 disposed between and separating the sound damping chamber 12 and the annular air guiding channel 7. In accordance with an embodiment of the present invention, the sound damping chamber 12 is in form of a cavity extending outward from a wall configuring the annular air guiding channel 7 and covered by the cover 14 disposed between and separating the sound damping chamber 12 and the annular air guiding channel 7. The sound damping chamber 12 and the annular air guiding channel 7 may be in fluid communication with each other. In accordance with an embodiment of the present invention, the sound damping chamber 12 is integrally formed on the annular air guiding channel 7 with the cover 14 disposed between the sound damping chamber 12 and the annular air guiding channel 7. Alternatively, the sound damping chamber 12 is removably mounted on the annular air guiding channel 7 with the cover 14 disposed between the sound damping chamber and the annular air guiding channel 7. The cover 14 covering the sound damping chamber 12 is of air tight and noise permeable material that absorbs and dissipates at least a portion of acoustic energy for at least partially attenuating the noise. In accordance with an embodiment of the present invention, the air tight and noise permeable material is fleece. The fleece may also include an insulating synthetic textile of polyethylene terephthalate (PET) and/or other synthetic fibers. For example, synthetic fibers can be glass wool or rock wool. In accordance with still another embodiment of the present invention, the air tight and noise permeable material is glass wool. The performance of the sound damping chamber 12 enhances performance of the diffuser section 6 and also enhances damping function and noise damping efficiency of at least one internal air duct 3 by reducing the entry sound pressure and peak level of the noise entering the internal air duct 3. Specifically, the sound damping chamber 12 in conjunction with the cover 14 of air tight and noise permeable material reduces the sound pressure and peak levels at the air inlet side 3a of the internal air duct 3 disposed within the diffuser section 6. More specifically, the sound damping chamber 12 with the cover 14 and the internal air duct 3 of air tight and noise permeable material ensures suppression, or at least limitation, of the propagation of noise towards the vehicle cabin by dissipation of the acoustic energy of the noise by reflection and absorption.

The internal air duct 3 is also of air tight and noise permeable material that absorbs and dissipates at least a portion of acoustic energy and transforms another portion of the acoustic energy into thermal energy for effectively damping in higher frequency levels and at least partially attenuating the noise. The acoustic absorption, dissipation of acoustic energy of the noise in conjunction with the multiple reflections, dampens sound pressure peaks at a broad frequency range. Such configuration of the internal air duct 3 of air tight and noise permeable material disposed in the diffuser section 6 and the cover 14 of air tight and noise permeable material disposed between the sound damping chamber 12 and the annular air guiding channel 7 utilizes sound reflection and absorption for achieving effective damping of the acoustic energy of the noise, thereby achieving attenuation of the noise and substantially reducing the noise transmission into the vehicle cabin. Also, such configuration of the internal air duct 3 of air tight and noise permeable material disposed in the diffuser section 6 and the cover 14 of air tight and noise permeable material disposed between the sound damping chamber 12 and the annular air guiding channel 7 is capable of suppressing sound waves in a broader frequency range. The system 10 further includes additional sound absorption means for effectively attenuating the noise emanating from the fan or the blower 5 and substantially reducing the noise transmission into the vehicle cabin, for example, the main housing 2 includes second sound absorption means in form of one or more cavities functioning as Helmholtz resonators. Additionally, the main housing 2 includes third sound absorption means in form of obstacles configured from either one of beams with micro-perforations and walls formed of air tight and noise permeable material.

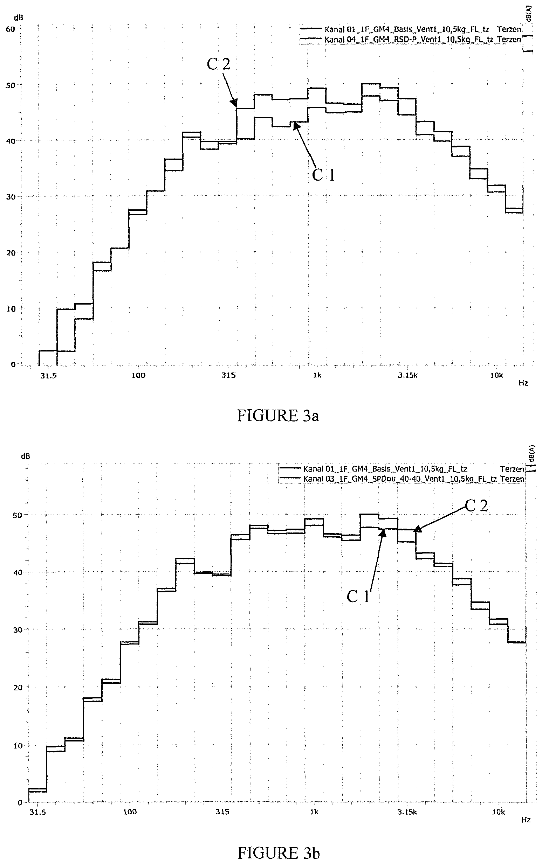

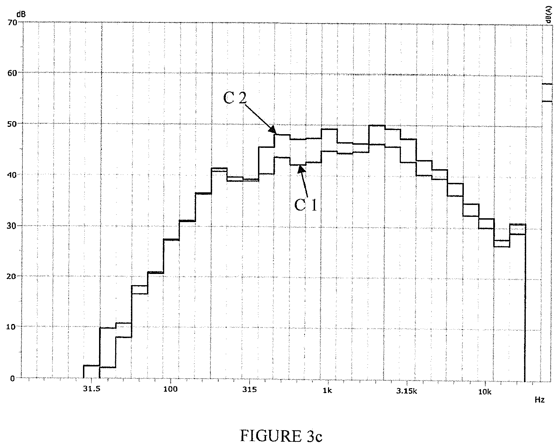

FIGURE 3a - FIGURE 3c illustrates graphical representation depicting comparison between noise at different frequency levels reaching a vehicle cabin configured with the Heating Ventilation and Air Conditioning (HVAC) system with and without the damping system of the present invention. Specifically, the curve 1, represented by "C1" in the FIGURE 3a - FIGURE 3c depict noise at different frequency levels reaching a vehicle cabin configured with the Heating Ventilation and Air Conditioning (HVAC) with damping system of the present invention and the curve 2, represented by "C2" depicts noise at different frequency levels reaching a vehicle cabin configured with the Heating Ventilation and Air Conditioning (HVAC) without damping system of the present invention. From the curves "C1" and "C2", it is evident that at most frequencies, particularly, at higher frequencies, specifically, above 350 Hz, the corresponding noise levels reaching the vehicle cabin are comparatively lower for HVACs with damping systems of the present invention than noise levels reaching the vehicle cabin for HVACs without the damping systems.

Several modifications and improvement might be applied by the person skilled in the art to the "system" as defined above, as long as it includes a main housing. The main housing includes a first sound absorption means in form of at least one internal air duct disposed therein for guiding at least a portion of fluid flowing there through. The internal air duct includes an air tight and noise permeable material that absorbs and dissipates at least a portion of acoustic energy of noise for at least partially attenuating the noise.

In any case, the invention cannot and should not be limited to the embodiments specifically described in this document, as other embodiments might exist. The invention shall spread to any equivalent means and any technically operating combination of means.

## Claims

1. A Heating Ventilation and Air Conditioning system (10) for a vehicle comprising a main housing (2) **characterized in that** said main housing (2) comprises a first sound absorption means in form of at least one internal air duct (3) disposed therein and adapted to guide at least a portion of fluid flowing there through;
wherein said internal air duct (3) comprises an air tight and noise permeable material adapted to absorb and dissipate at least a portion of acoustic energy of noise for at least partially attenuating the noise.

2. The Heating Ventilation and Air Conditioning system (10) as claimed in claim 1, wherein said air tight and noise permeable material is fleece.

3. The Heating Ventilation and Air Conditioning system (10) as claimed in claim 1, wherein said air tight and noise permeable material is glass wool.

4. The Heating Ventilation and Air Conditioning system (10) as claimed in claim 1 to 3, wherein said main housing (2) comprises a blower housing (4) adapted to receive a blower (5), said blower housing (4) also comprising an annular air guiding channel (7), said first sound absorption means further includes a sound damping chamber (12) integrally formed on said annular air guiding channel (7) with a cover disposed between said sound damping chamber (12) and said annular air guiding channel (7), wherein said cover is of air tight and noise permeable material.

5. The Heating Ventilation and Air Conditioning system (10) as claimed in claim 4, wherein said sound damping chamber (12) is removably mounted on said annular air guiding channel (7).

6. The Heating Ventilation and Air Conditioning system (10) as claimed in claim 1 to 5, wherein the at least one internal air duct (3) is adapted to reduce noise in a frequency range between 300 Hz and 2 kHz.

7. The Heating Ventilation and Air Conditioning system (10) as claimed in claim 4 to 6, wherein the system (10) comprises an evaporator (8), a heater and air flow guide means for guiding fluid flow through at least said evaporator (8), said blower housing (4) comprising said blower (5) and said annular air guiding channel (7) between said blower (5) and said blower housing (4) and a diffuser section (6) is adapted to connect said blower housing (4) to said evaporator (8).

8. The Heating Ventilation and Air Conditioning system (10) as claimed in claim 7, wherein the at least one internal air duct (3) is disposed in said diffuser section (6).

9. The Heating Ventilation and Air Conditioning system (10) as claimed in claim 1 to 8, wherein said main housing (2) comprises second sound absorption means in form of one or more cavities functioning as Helmholtz resonators.

10. The Heating Ventilation and Air Conditioning system (10) as claimed in claim 1 to 9, wherein said main housing (2) further comprises third sound absorption means in form of obstacles configured from either one of beams with micro-perforations and walls formed of air tight and noise permeable material.
